# FASCICULE DE BREVET EUROPEEN

(11) **EP 0 745 777 B1**
(45) Date de publication et mention de la délivrance du brevet: **27.03.2002**
(21) Numéro de dépôt: 96400822.1
(22) Date de dépôt: 18.04.1996
(51) Int. Cl.: F16C 11/04, F16C 11/10

(54) **Dispositif de protection d'un ressort de commande d'un organe rotatif**
Schutzvorrichtung einer Steuerfeder eines rotierenden Gliedes
Protection device of a control spring of a rotating member

(30) Priorité: 31.05.1995 FR 9506446
(43) Date de publication de la demande: 04.12.1996
(73) Titulaire: Société à responsabilité limitée dite: MORIN FRERES, F-45740 Lailly en Val (FR)
(72) Inventeur: Morin, Marcel, 45740 Lailly en Val (FR); Morin, Jacques, 45740 Lailly en Val (FR)
(74) Mandataire: Vander-Heym, Serge

(56) Documents cités:
- EP-A- 0 381 202
- EP-A- 0 438 931
- DE-A- 3 712 159
- US-A- 3 450 365
- US-A- 3 618 721

## Description

La présente invention est relative à un dispositif de protection d'un ressort de commande d'un organe rotatif (US 3 618 721 A).

Dans de nombreux mécanismes, le pivotement d'un bras est commandé par la détente d'un ressort, enroulé en hélice et guidé sur l'arbre autour de l'axe duquel ledit bras peut pivoter sous l'action dudit ressort. L'une des extrémités du ressort est fixe et l'autre prend appui sur le bras.

A titre d'exemple, un tel mécanisme est utilisé dans le dispositif décrit dans le brevet européen numéro 438931 concernant un dispositif pour fixer un godet, ou analogue, à l'extrémité du bras d'un chargeur.

Dans ce type d'application, le mécanisme à ressort travaille dans des conditions très mauvaises et de la terre ou des cailloux s'agglomère entre les spires du ressort et autour de ce dernier et forme, en séchant, une croûte très dure. De ce fait, des efforts très importants sont nécessaires pour comprimer le ressort en vue de faire pivoter le bras en sens inverse de l'action de ce dernier. L'expérience a montré que ces efforts pouvaient entraîner la destruction du ressort.

La présente invention, qui remédie à ces inconvénients, est remarquable en ce que le ressort est recouvert d'un manchon formant, en coopération avec le moyeu du bras pivotant et l'organe fixe sur lequel le ressort prend appui, un boîtier étanche.

Selon la présente invention, le mot "étanche" signifie que le boîtier précité s'oppose à la pénétration des impuretés normalement présentes sur le lieu d'utilisation du dispositif auquel l'invention est appliquée.

La présente invention sera mieux comprise par la description qui va suivre faite en se référant au dessin annexé à titre d'exemple indicatif, seulement, sur lequel :
- la figure 1 est une vue en coupe d'un mécanisme à ressort comportant le perfectionnement de l'invention;
- la figure 2 est une vue analogue à la figure 1, montrant une variante de réalisation.

En se reportant au dessin, on voit que de la façon connue , 1 est un bras pivotant comportant un moyeu 2 monté sur un arbre 3 fixe, porté, par exemple, par deux flasques 4. Le bras 1 est soumis à l'action d'un ressort 5, enroulé en hélice, guidé sur l'arbre 3. Les extrémités du ressort 5 sont recourbées pour former deux doigts 6 et 7. Le doigt 6 est engagé dans un logement du moyeu 2 et celui 7 dans un logement d'un organe solidaire de l'arbre 3, tel que l'embout 8. Le ressort est préalablement bandé et, de cette façon, il tend à faire pivoter le bras 1.

Selon l'invention, le ressort 5 est recouvert d'un manchon 9 formant, en coopération avec le moyeu 2 et le flasque correspondant, un boîtier étanche s'opposant à la pénétration de la terre ou analogue entre les spires du ressort. Ce boîtier peut être rempli de graisse.

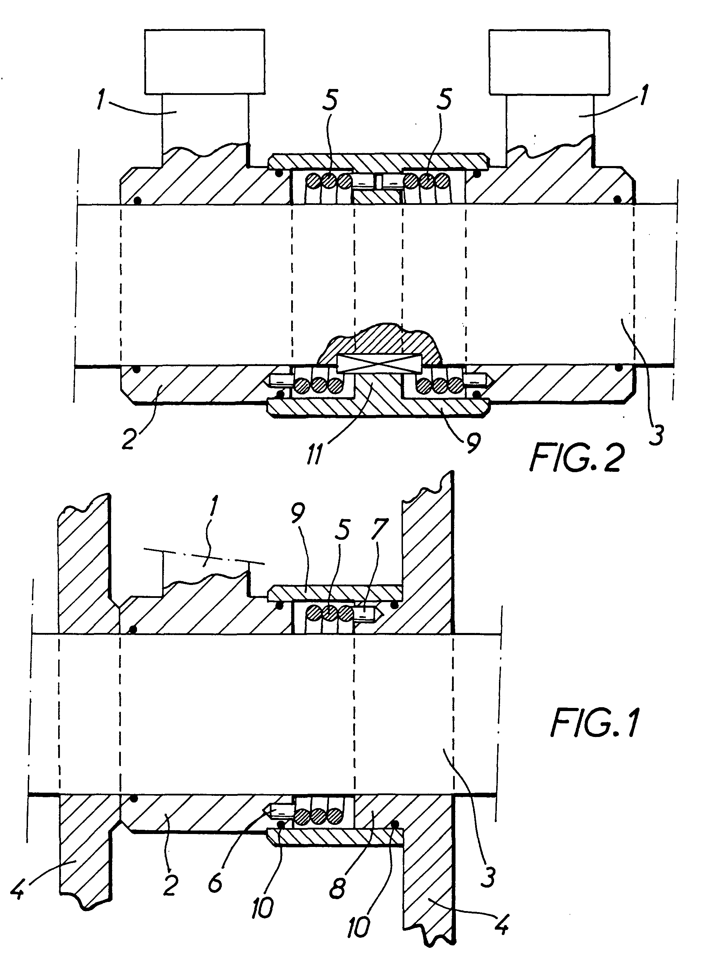

Dans l'exemple de la figure 1, le manchon 9 est guidé, à une extrémité, sur un épaulement du moyeu 2 et, à l'autre, sur l'embout 8. Des joints toriques , tels que ceux 10, peuvent être utilisés pour parfaire l'étanchéité.

Selon une variante, le manchon 9 peut être formé par une jupe solidaire du moyeu 2. Selon une autre variante, le manchon 9 peut être formé par une jupe de l'embout 8.

Dans tous les cas, le manchon 9 a aussi pour fonction de coopérer à l'immobilisation axiale du moyen 2 sur l'arbre 3.

La figure 2 montre l'application du dispositif de l'invention à un mécanisme comportant plusieurs bras montés sur le même arbre.

Dans ce cas, le manchon 9 présente un voile médian 11, traversé par l'arbre 3 sur lequel il est claveté. Le voile 11 constitue le point d'appui fixe pour chacun des deux ressorts 5.

Selon un autre mode de réalisation le voile 11 peut être constitué par une collerette prévue sur l'arbre 3 ou par une bague fixée sur ce dernier.

Selon une variante du mode de réalisation ci-dessus, le manchon 9 peut être constitué par une jupe de l'un ou l'autre des moyeux.

Dans l'exemple de la figure 2, l'immobilisation axiale des moyeux n'a pas été représentée, elle peut être réalisée au moyen de flasques analogues à ceux 4 de la figure 1 ou par tous autres moyens.

## Revendications

1. Dispositif de protection comportant un ressort de commande et un organe rotatif du genre de ceux dans lequel un bras (1) peut pivoter autour de l'axe d'un arbre fixe (3) , sur lequel il est monté, sous l'action du ressort (5) enroulé en hélice et guidé sur ledit arbre et un manchon (9) recouvre le ressort (5) **caractérisé en ce que** le manchon (9) forme, en coopération avec une partie du bras (1) et l'organe de maintien de l'arbre (3), un boîtier étanche.

2. Dispositif selon la revendication 1, **caractérisé en ce que** le manchon (9) fait partie intégrante du bras (1).

3. Dispositif selon la revendication 1, **caractérisé en ce que** le manchon (9) fait partie intégrante de l'arbre (3) ou de son organe de support.

## Patentansprüche

1. Schutzvorrichtung umfassend eine Steuerfeder und ein rotierendes Organ von dem Typ, in dem ein Arm (1) um die Achse einer feststehenden Welle (3) schwenken kann, auf der er unter der Wirkung der in Schneckenform eingerollten und auf besagter Welle geführten Feder (5) angebracht ist, und eine Muffe (9) die Feder (5) abdeckt, **dadurch gekennzeichnet, dass** die Muffe (9) in Zusammenwirkung mit einem Teil des Arms (1) und dem Festhalteorgan der Welle (3) ein dichtes Gehäuses bildet.

2. Vorrichtung gemäß Anspruch 1, **dadurch gekennzeichnet, dass** die Muffe (9) fester Bestandteil des Arms (1) ist.

3. Vorrichtung gemäß Anspruch 1, **dadurch gekennzeichnet, dass** die Muffe (9) fester Bestandteil der Welle (3) oder ihres Stützorgans ist.

## Claims

1. Protection device comprising a control spring and a rotary element of the type in which an arm (1) is able to pivot around the axis of a fixed shaft (3) on which it is mounted under the action of the spring (5) spiral-wound and guided on said shaft, and a sleeve (9) covers the spring (5) and **characterised in that** the sleeve (9) forms, together with one portion of the arm (1) and the shaft support element (3), a sealed box.

2. Device according to claim 1, **characterised in that** the sleeve (9) forms an integral part of the arm (1).

3. Device according to claim 1, **characterised in that** the sleeve (9) forms an integral part of the shaft (3) or its support element.
